# EUROPÄISCHE PATENTSCHRIFT

(11) **EP 0 856 443 B1**
(45) Veröffentlichungstag und Bekanntmachung des Hinweises auf die Patenterteilung: **01.08.2001**
(21) Anmeldenummer: 97121345.9
(22) Anmeldetag: 04.12.1997
(51) Int. Cl.: B60R 22/46, B60R 22/34

(54) **Gurtaufroller**
Belt retractor
Enrouleur de ceinture

(30) Priorität: 05.12.1996 DE 19650494
(43) Veröffentlichungstag der Anmeldung: 05.08.1998
(73) Patentinhaber: BREED AUTOMOTIVE TECHNOLOGY, INC., Lakeland, FL 33807-3050 (US)
(72) Erfinder: Specht, Martin, 82340 Feldafing (DE); Bucher, Raimund, 86922 Eresing (DE)
(74) Vertreter: Nöth, Heinz, Dipl.-Phys.

(56) Entgegenhaltungen:
- EP-A- 0 791 513
- WO-A-96/05988
- WO-A-97/19838

## Beschreibung

Die Erfindung betrifft einen Gurtaufroller für einen Sicherheitsgurt.

Aus der DE 44 36 810 A1 ist ein Gurtaufroller bekannt, welcher bei einem Unfall gewährleistet, daß die Gurtspule, welche gegen weitere Drehung am Rahmen blockiert ist, einen insbesondere gebremsten Gurtbandauszug zulässt. Dadurch wird das Verletzungsrisiko beim Vorverlagern des Körpers des angeschnallten Fahrzeuginsassen verringert ist. Dies beruht darauf, daß die Rückhaltekräfte, welche bei der Vorverlagerung auf den Körper des Fahrzeuginsassen einwirken, auf eine bestimmte Belastung begrenzt sind.

In der älteren EP-A-791513 (Stand der Technik nach Art. 54(3) EPÜ) ist ein Gurtaufroller für einen Sicherheitsgurt eines Kraftfahrzeugs beschrieben, welcher eine in einem Aufrollerrahmen drehbar gelagerte Gurtspule und einen Lastbegrenzer aufweist. Der Lastbegrenzer lässt bei gegen Bandauszug am Aufrollerrahmen blockierter Gurtspule, bei Überschreitung einer bestimmten Kraftschwelle, einen Gurtbandauszug mit Energieumwandlung zu. Der Lastbegrenzer besitzt hierzu zwei Lastbegrenzerbereiche, welche mit an der Gurtspule vorgesehenen Blockiereinrichtungen in Form von Verzahnungen gekoppelt sind. Die Blockiereinrichtungen sind zur Einstellung einer bestimmten Kraftschwelle wahlweise einzeln oder zusammen betätigbar. Die beiden Lastbegrenzerbereiche können unterschiedliche Kraftschwellen haben, wobei die Betätigung der Blockiereinrichtungen in Abhängigkeit von Fahrzeuginsassen-Spezifischen Daten und/oder Fahrzeug-Spezifischen Daten gesteuert werden kann. Die am Aufrollerrahmen und an der Gurtspule vorgesehenen Blockiereinrichtungen und Blockierelemente sind zueinander ausgerichtet und besitzen einen axialen Abstand voneinander. Ferner können die Blockierelemente im Normalbetrieb in einem der wahlweisen Betätigung entsprechenden Zustand in Bereitschaft gehalten werden. Die Blockiereinrichtungen an der Gurtspule sind als Verzahnungen und die Blockierelemente als Klinken ausgebildet, wobei die Klinken um Schwenkachsen schwenkbar sind.

Aufgabe der Erfindung ist es, einen Gurtaufroller der eingangs genannten Art zu schaffen, bei welchem das Ansprechen des Lastbegrenzers mit einfachen mechanischen Mitteln auf unterschiedliche Kraftschwellen einstellbar ist.

Diese Aufgabe wird erfindungsgemäß durch die Merkmale des Patentanspruches 1 gelöst. Die Unteransprüche beinhalten vorteilhafte Weiterbildungen der Erfindung.

Bei der Erfindung ist der Lastbegrenzer in wenigstens zwei Lastbegrenzerbereiche aufgeteilt, wobei jeder Bereich einer der wenigstens an der Gurtspule vorgesehenen Blokkiereinrichtungen zugeordnet und mit dieser Blockiereinrichtung gekoppelt ist. Die Kraftschwelle, oberhalb welcher die Lastbegrenzerwirkung einsetzt, kann in Abhängigkeit von den fahrzeuginsassenspezifischen Daten einstellbar sein, wobei zur Einstellung dieser bestimmten Kraftschwelle die Blockiereinrichtungen wahlweise betätigbar sind, so daß ein bestimmter Lastbegrenzerbereich oder mehrere kombinierte Lastbegrenzerbereiche bei Überschreitung der eingestellten Kraftschwelle betätigbar sind.

In vorteilhafter Weise besitzen die Lastbegrenzerbereiche unterschiedliche Kraftschwellen. Wenn beispielsweise zwei Lastbegrenzerbereiche vorgesehen sind, kann der eine Lastbegrenzerbereich eine Kraftschwelle von 2 kN und der andere Lastbegrenzerbereich eine Kraftschwelle von 4 kN aufweisen. Bei der additiven Kombination dieser beiden Kraftschwellen erzielt man einen Lastbegrenzerbereich mit einer Kraftschwelle von 6 kN.

Die Blockiereinrichtungen an der Gurtspule und am Aufrollerrahmen können in herkömmlicher Weise ausgebildet sein und beispielsweise an der Gurtspule vorhandene umlaufende Verzahnungen sein, in die am Aufrollerrahmen abgestützte Blockierklinken eingreifen können. Es ist jedoch auch möglich, die Blockiereinrichtungen so zu gestalten, daß die Blockierklinken an der Gurtspule vorgesehen sind und in entsprechende Verzahnungen am Aufrollerrahmen eingreifen. Die aufeinander abgestimmten Blockierelemente werden in bekannter Weise durch fahrzeugsensitive oder gurtbandsensitive Mittel, beispielsweise bei einem Unfall in Eingriff gebracht. Damit dieser Eingriff innerhalb der vorgeschriebenen kurzen Zeit erfolgt, werden in Abhängigkeit von der eingestellten Kraftschwelle die entsprechenden Blockierelemente in einem Bereitschaftszustand gehalten, so daß beim Ansprechen der Sensorik die entsprechenden Blockierelemente miteinander in Eingriff gebracht werden.

Die Gurtspule besitzt in vorteilhafter Weise mehrere Spulenteile. Ein erstes Spulenteil dient zum Aufwickeln des Gurtbandes des Sicherheitsgurtes. Dieses Spulenteil hat einen im wesentlichen zylindrische Außenfläche, auf welche das Gurtband aufgewickelt ist. Ferner besitzt die Gurtspule zweite Spulenteile, an die jeweils ein Lastbegrenzerbereich gekoppelt ist. Die Lastbegrenzerbereiche sind ferner an das erste Spulenteil gekoppelt, auf welches das Gurtband aufgewickelt ist. Derjenige Lastbegrenzerbereich bzw. diejenigen Lastbegrenzerbereiche, welche zwischen dem ersten Spulenteil und der zugeordneten Blockiereinrichtung bzw. den kombinierten zugeordneten Blockiereinrichtungen liegt bzw. liegen, kommen zur Bildung der Lastbegrenzung bei der Vorverlagerung des Körpers des angeschnallten Fahrzeuginsassen zur Wirkung.

Durch die Erfindung wird daher aufgrund der wahlweisen Betätigbarkeit der Blockiereinrichtungen eine Einstellung der Kraftschwelle des mehrstufig, insbesondere dreistufig ausgebildeten Lastbegrenzers, auf den mit dem Sicherheitsgurt angeschnallten Fahrzeuginsassen angepaßt ist, erreicht.

Um die jeweiligen Blockierelemente in Blockierbereitschaft während des normalen Gurtaufrollerbetriebes zu bringen, kann eine Schiebeeinrichtung vorgesehen sein, welche in axialer Richtung der Gurtspule wirksam ist und die entsprechenden Blockierelemente, insbesondere die Blockierelemente, welche am Aufrollerrahmen vorgesehen sind, in Blockierbereitschaft mit den zugeordneten Blockierelementen an der Gurtspule bringt.

Die Schiebeeinrichtung kann mit geeigneten Antriebsmitteln, beispielsweise mechanischen (Zugmitteln, wie Bowdenzug oder Schubmitteln, beispielsweise Federkräften), hydraulischen oder pneumatischen Mitteln oder elektromagnetisch betätigt werden.

Die Einstellung der Lastbegrenzungsstufen kann in Abhängigkeit von Gewicht und/oder der Sitzposition (Körpergröße) des Fahrzeuginsassen und in Abhängigkeit des Fahrzeugtyps (Kleinfahrzeug oder schwere Limousine), insbesondere unter Auswertung des Unfallschwere-Fahrzeug-Verzögerungsimpulses gewählt werden. Die Verzögerung dieses Impulses beträgt beispielsweise bei einem Kleinfahrzeug 55 msec und bei einer großen Limousine 75 msec.

Anhand der Figuren wird an Ausführungsbeispielen die Erfindung noch näher erläutert. Es zeigt:
- Fig. 1:: ein erstes Ausführungsbeispiel;
- Fig. 2:: ein zweites Ausführungsbeispiel;
- Fig. 3:: eine Schiebeeinrichtung, mit welcher Blockiereinrichtungen am Gurtaufroller in Blockierbereitschaft gebracht werden können;
- Fig. 4:: eine weitere Ausführungsform für eine Schiebeeinrichtung, um verschiedene Blockiereinrichtungen in Blockierbereitschaft zu bringen;
- Fig. 5:: ein drittes Ausführungsbeispiel, um verschiedene Blockiereinrichtungen in Blockierbereitschaft zu bringen;
- Fig. 6:: ein viertes Ausführungsbeispiel des erfindungsgemäßen Gurtaufrollers;
- Fig. 7:: eine axiale Ansicht des in Fig. 6 dargestellten vierten Ausführungsbeispiels;
- Fig. 8:: ein fünftes Ausführungsbeispiel des erfindungsgemäßen Gurtaufrollers;
- Fig. 9:: eine axiale Ansicht des in Fig. 8 dargestellten fünften Ausführungsbeispiels;
- Fig. 10:: ein sechstes Ausführungsbeispiel des erfindungsgemäßen Gurtaufrollers in axialer Ansicht und ;
- Fig. 11:: ein siebtes Ausführungsbeispiel des erfindungsgemäßen Gurtaufrollers.

Bei den dargestellten Ausführungsbeispielen ist in einem Aufrollerrahmen 13 eine Gurtspule drehbar gelagert. Die Gurtspule besitzt bei den dargestellten Ausführungsbeispielen drei Spulenteile. Auf einem ersten Spulenteil 6 wird ein Gurtband 1 des Sicherheitsgurtes aufgewickelt. Zweite Spulenteile 7 und 8 sind im wesentlichen scheibenförmig ausgebildet und tragen auf ihren Umfängen Blockierverzahnungen 11 und 12. Die zweiten scheibenförmigen Spulenteile 7 und 8 befinden sich an den stirnseitigen Enden des ersten Spulenteiles 6. Im Normalbetrieb sind die zweiten Spulenteile 7 und 8 drehfest mit dem ersten Spulenteil 6 verbunden. Diese Verbindung erfolgt über den Lastbegrenzer, welcher bei den dargestellten Ausführungsbeispielen aus zwei Lastbegrenzerbereichen besteht.

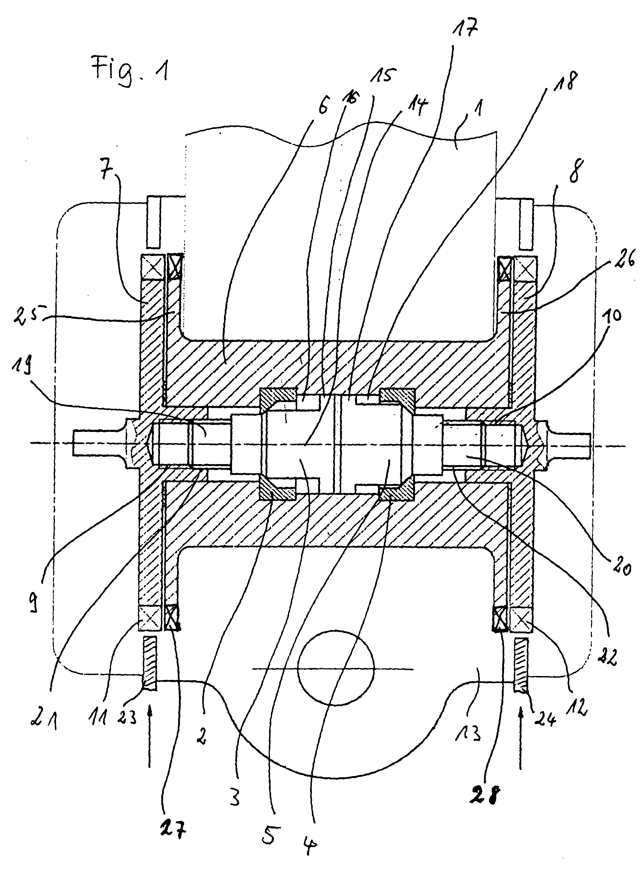

Bei dem in der Fig. 1 dargestellten Ausführungsbeispiel besteht der zwischen das erste Spulenteil 6 und das zweite Spulenteil 7 geschaltete Lastbegrenzerbereich aus einem Verformungskörper 3, welcher drehfest mit dem ersten Spulenteil 6 gekoppelt ist. Hierzu besitzt der Verformungskörper 3 einen oder mehrere Vorsprünge 15, welche in axial sich erstreckende Führungsnuten 16 an der Innenseite des ersten Spulenkörpers 6 ragen. An den Verformungskörper 3 ist ein Gewindezapfen 19 mit einem Außengewinde 21 angeformt, welches in ein Innengewinde 9 einer an das zweite Spulenteil 7 angeformten Führungshülse, die in das Innere des ersten Spulenteils 6 eingesteckt ist, eingesetzt ist. Der Lastbegrenzerbereich besitzt ferner ein Formteil 2, welches in axialer Richtung am ersten Spulenteil 6 festgelegt ist. Das Formteil 2 kann sich in axialer Richtung nicht bewegen. Das Formteil 2 besteht aus einem härteren Material als der Verformungskörper 3. Im Sinne der Umformtechnik wirkt daher der Formkörper 2 wie eine Patrize und der Verformungskörper 3 aus dem weicheren Material wie eine Matrize, wenn eine axiale Verschiebung der beiden Teile gegeneinander stattfindet.

Spiegelbildlich zu einer senkrecht zur Spulenachse 14 gelegten Mittelebene befindet sich zwischen dem ersten Spulenteil 6 und dem zweiten Spulenteil 7 an der anderen (rechten) Stirnseite der Spule ein weiterer Lastbegrenzerbereich, welcher vom Verformungskörper 5 aus weichem Material und dem Formteil 4 aus hartem Material gebildet wird. Am Verformungskörper 5 ist ebenfalls ein Gewindezapfen 20 mit einem Außengewinde 22 angeformt, das in Eingriff steht mit einem Innengewinde 10 an einer an das zweite Spulenteil 8 angeformten Führungshülse, die in das Innere des ersten Spulenteiles 6 eingesteckt ist.

Bei dem auf der rechten Seite vorgesehenen Lastbegrenzerbereich sind am Verformungskörper 5 Vorsprünge 17 vorgesehen, welche in axial sich erstreckende Führungsnuten 18 ragen. Auf diese Weise wird die Drehverbindung zwischen dem Verformungskörper 5 und dem ersten Spulenteil 6 hergestellt.

Das Formteil 4 aus dem härteren Material ist in axialer Richtung an dem ersten Spulenteil 6 festgelegt.

Während des Normalbetriebs des Aufrollers drehen sich die Spulenteile 6, 7 und 8 gemeinsam und bilden die Gurtspule, da durch den Lastbegrenzer bei den während des normalen Aufrollerbetriebs auftretenden Kräften eine drehfeste Verbindung zwischen dem ersten Spulenteil 6 und den zweiten Spulenteilen 7 und 8 über die Lastbegrenzerbereiche hergestellt wird. Es können zusätzliche nicht näher dargestellte Scherstifte oder andere Drehverbindungsmittel vorgesehen sein, die dann abgeschert werden, wenn der Lastbegrenzer zur Wirkung kommen soll.

Mit den Blockierverzahnungen 11 und 12 an den beiden scheibenförmigen Spulenteilen 7 und 8 können wahlweise, wie im einzelnen noch erläutert wird, Blockierklinken 23 und 24 in Eingriff gebracht werden. Wenn beispielsweise die Blockierklinke 23 aufgrund einer überhöhten Beschleunigung, beispielsweise während eines Unfalls, mit der Verzahnung 11 in Eingriff gebracht wird, wird das zweite Spulenteil 7 gegen Drehung blockiert. Der Fahrzeuginsasse wird von dem angeschnallten Sicherheitsgurt im Fahrzeugsitz festgehalten. Im Falle einer Vorverlagerung des Körpers des angeschnallten Fahrzeuginsassen wird über das Gurtband 1 in Bandauszugsrichtung eine Kraft auf das erste Spulenteil 6 ausgeübt. Wenn diese Kraft eine durch den Lastbegrenzerbereich zwischen den beiden Spulenteilen 6 und 7 festgelegte Belastungsgrenze (Kraftschwelle) übersteigt, kommt der Lastbegrenzerbereich, bestehend aus dem Verformungskörper 3 und dem Formteil 2, zur Wirkung. Durch die Kraft des Gurtbandes 1 wird das erste Spulenteil 6 um die Spulenachse 14 gedreht. Diese Drehung wird auf den Verformungskörper 3 übertragen. Aufgrund des Gewindeeingriffes des Gewindezapfens 19 in das durch die Blockierklinke 23 festgehaltene Gewinde 9 wird der Verformungskörper 3 in axialer Richtung in der Fig. 1 nach links bewegt. Das Formteil 2, welches als Patrize wirkt, wird in axialer Richtung festgehalten, so daß es sich in das weichere Material des Verformungskörpers 3 eingräbt und dabei Verformungsarbeit verrichtet. Die hierzu absorbierte Energie wirkt sich als Lastbegrenzung der Reaktionskräfte aus, die von dem Gurtband 1 auf den vorverlagerten Körper des Fahrzeuginsassen ausgeübt werden.

In gleicher Weise wirkt der Lastbegrenzerbereich auf der rechten Seite der Gurtspule, welcher aus dem Formkörper 4 (Patrize) aus dem härteren Material und dem Verformungskörper 5 (Matrize) aus dem weicheren Material besteht, wenn die Blockierklinke 24 mit der Blockierverzahnung 12 in Eingriff steht. Die Blockierklinken 23 und 24 können wahlweise in Abhängigkeit von einem voreingestellten Wert einer Kraftschwelle in Eingriff gebracht werden. Sie können jedoch auch beide gemeinsam in Eingriff gebracht werden, so daß dann beide Lastbegrenzerbereiche zur Wirkung kommen.
Durch entsprechende Dimensionierung können die Kraftschwellen für die beiden Kraftbegrenzerbereiche festgelegt werden. Es kann dadurch erfolgen, daß entsprechende Gewindesteigungen bei den Gewinden 9 und 21 bzw. 10 und 22 vorgesehen sind, in Kombination mit den Eingriffsradien zwischen den Verformungskörpern 3 bzw. 5 und den Formteilen 2 bzw. 4. Ferner kann durch den Unterschied der Härtegrade zwischen den Formteilen 2, 4 und den Verformungskörpern 3, 5 ebenfalls eine Bemessung der Kraftschwelle des jeweiligen Kraftbegrenzerbereiches erreicht werden. Beispielsweise beträgt die Kraftschwelle des linken Kraftbegrenzerbereiches 2 kN und die des rechten Kraftbegrenzerbereiches 4 kN. Bei gemeinsamer Wirkung (beide Klinken 23, 24 sind in Eingriff) erreicht man eine Kraftschwelle von 6 kN.

Bei dem dargestellten Ausführungsbeispiel der Fig. 1 sind an Führungsflanschen 25, 26 des ersten Spulenteils 6 Blockierverzahnungen 27, 28 vorgesehen. Eine oder auch beide Blockierklinken 23, 24 oder separat steuerbare, nicht näher dargestellte Blockierklinken können mit einer oder beiden Blockierverzahnungen 27, 28 in Eingriff gebracht werden, um das erste Spulenteil 6 gegen Drehung am Aufrollerrahmen 13 zu blockieren. In diesem Betriebsfall ist die Wirkung des Kraftbegrenzers überbrückt, und es erfolgt keine Kraftbegrenzung beim Festhalten des angeschnallten Fahrzeuginsassen.

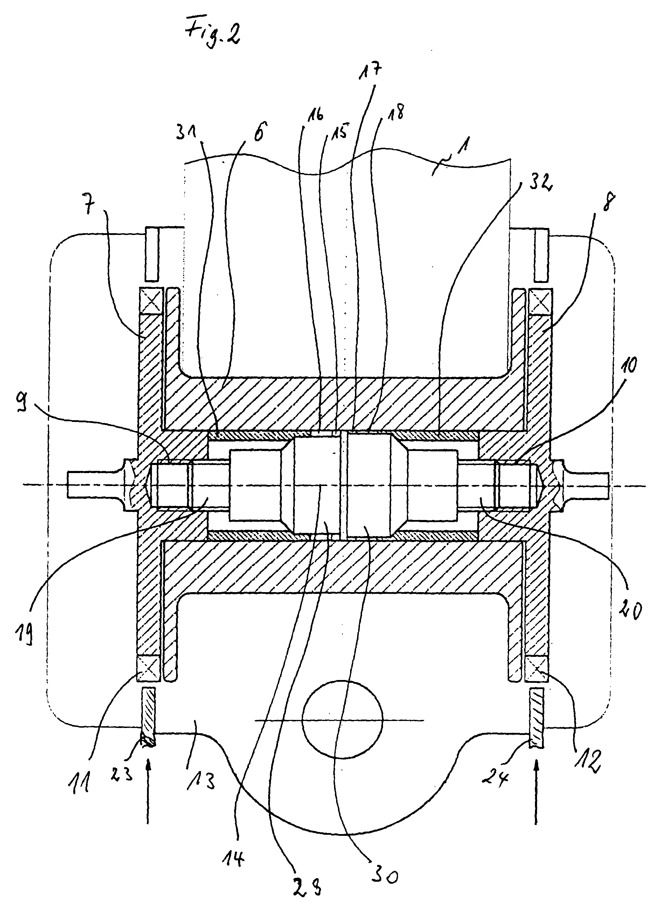

Bei dem in der Fig. 2 dargestellten Ausführungsbeispiel sind ebenfalls zwischen die beiden zweiten Spulenteilen 7 und 8 mit den Blockierverzahnungen 11 und 12 und das erste Spulenteil 6, auf welches das Gurtband 1 aufgewickelt ist, Kraftbegrenzerbereiche geschaltet.

Auch hier sind zu beiden Seiten einer senkrecht zur Spulenachse 14 gelegten Mittelebene zwei Kraftbegrenzerbereiche vorgesehen. Wie beim ersten Ausführungsbe spiel sind mit dem ersten Spulenteil 6 mitdrehbare Bauteile, welche in axialer Richtung (Spulenachse 14) aufgrund der Gewindeeingriffe (Gewinde 9 und 21 bzw. 10 und 22) axial verschiebbar sind, sowie in axialer Richtung festgelegte Bauteile der Lastbegrenzerbereiche vorgesehen. Beim Ausführungsbeispiel der Fig. 2 besteht ein in axialer Richtung verschiebbares Bauteil (Patrize) 29 bzw. 30 aus härterem Material als das in axialer Richtung festgelegte Bauteil (Matrize) 31, 32 aus weicherem Material. Beim Ausführungsbeispiel der Fig. 2 liegen die beiden Matrizen 31, 32 an den angeformten Führungshülsen der blockierbaren zweiten Spulenteile 7 und 8 an, so daß sie in axialer Richtung festgelegt sind.

Die Eingriffsflächen zwischen den Patrizen 29, 30 und Matrizen 31, 32 sind konisch ausgebildet. Durch entsprechende Materialwahl, durch die Steigungen der Gewindeeingriffe zwischen den Gewindezapfen 19 und 20 und den zweiten Spulenteilen 7 und 8 sowie den Radien, auf denen die Verformungseingriffe zwischen den Patrizen 29, 30 und den Matrizen 31, 32 erfolgen, lassen sich entsprechende Kraftschwellen für die beiden Kraftbegrenzungsbereiche wie beim Ausführungsbeispiel der Fig.1 einstellen. Durch die wahlweise Blockierung der zweiten Spulenteile 7 und 8 erreicht man dann mehrere Stufen für die Kraftschwellen des Lastbegrenzers.

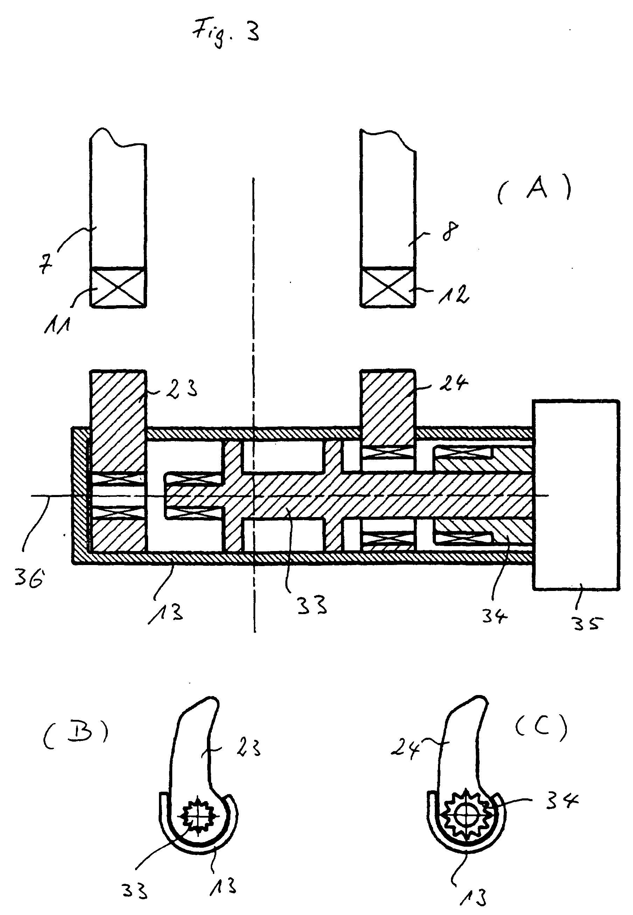

Anhand der Figuren 3 bis 5 werden verschiedene Ausführungsbeispiele dargestellt, mit denen eine Voreinstellung der Blockierbereitschaft und damit eine Bestimmung der Kraftschwelle für den Lastbegrenzer erreicht wird.

Bei der in der Fig. 3 dargestellten Ausführungsform ist eine Schiebeeinrichtung vorgesehen mit zwei Schiebern 33 und 34. Die beiden Schieber sind koaxial angeordnet und parallel zur Spulenachse 14 längs einer Verschiebelinie 36 in der Figur nach links und nach rechts verschiebbar. Der Schieber 33 kann mit der Blockierklinke 23 in drehfesten Eingriff gebracht werden, und der Schieber 34 kann mit der Blockierklinke 24 in drehfesten Eingriff gebracht werden. Die Betätigung der Schieber erfolgt mit Hilfe eines gesteuerten Schieberantriebs 35, der pneumatisch, mechanisch, elektromagnetisch oder anderweitig in geeigneter Weise arbeiten kann. Die Schieber 33 und 34 sowie die Blokkierklinken 23 und 24 sind am Aufrollerrahmen 13 in einer schalenförmigen Führung abgestützt. Seitenansichten der Klinken und Schieberführung in der Darstellung (A) der Fig. 3 sind in den Darstellungen (B) und (C) gezeigt. Die Verschiebelinie 36 ist auch die Drehachse für die Blockierklinken bei ihrer Bewegung in den Blockiereingriff.

Wenn der Schieber 33 in Dreheingriff mit der Blockierklinke 23 ist, wird diese Klinke in Blockierbereitschaft gehalten. Wenn sie beispielsweise bei einem Crash mit der zugeordneten Blockierverzahnung 11 im zweiten Spulenteil 7 in Eingriff kommt, wird bei Überschreiten der Kraftschwelle des zugeordneten Kraftbegrenzerbereichs eine Vorverlagerung des Körpers des angeschnallten Fahrzeuginsassen mit der vorgegebenen Kraftbegrenzung ermöglicht. Das gleiche ist der Fall für die Zuschaltung des anderen Kraftbegrenzerbereichs, wenn der Schieber 34 in Dreheingriff mit der Blockierklinke 24 kommt. Es können auch beide Klinken 23 und 24 gleichzeitig in Blockierbereitschaft gehalten werden. Die Anordnung der Schieber 33, 34 und der Blockierklinken 23, 24 kann auch so ausgebildet sein, daß die Klinken, welche außer Eingriff mit den Schiebern sind, in Blockierbereitschaft sind.

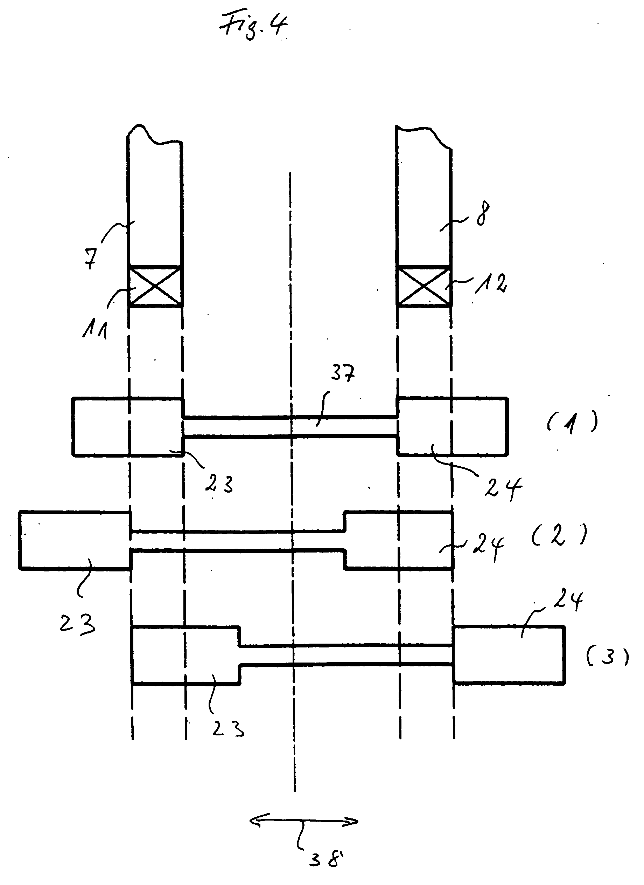

Bei dem in der Fig. 4 gezeigten Ausführungsbeispiel sind die beiden Blockierklinken 23 und 24 durch ein stabförmiges Verbindungsstück 37 starr miteinander verbunden. Die Klinken 23 und 24 werden gemeinsam in einer zur Spulenachse 14 parallelen Verschieberichtung 38 bei der Einstellung der Blockierbereitschaft verschoben. In der Figur sind drei mögliche Positionierungen dargestellt. Bei der Positionierung (1) befinden sich beide Blockierklinken 23 und 24 in Bereitstellung zur Blockierung der beiden zweiten Spulenteile 7 und 8. In dieser Einstellung ist die höchstmögliche Kraftschwelle, die sich aus den beiden Kraftbegrenzerbereichen addiert, eingestellt.

Bei der Klinkenpositionierung (2) befindet sich nur die rechte Blockierklinke 24 in Blokkierbereitschaft. In einem Crashfall wird dann nur das zweite Spulenteil 8 blockiert und damit der eine der beiden Kraftbegrenzerbereiche zur Wirkung gebracht. Bei der Klinkenpositionierung (3) ist die linke Blockierklinke 23 in Blockierbereitschaft gebracht, so daß im Crashfall durch die Blockierung des zweiten Spulenteils 7 der andere Lastbegrenzerbereich zur Wirkung gebracht wird.

Auch beim Ausführungsbeispiel der Fig. 4 kann durch nicht näher dargestellte gesteuerte Antriebsmittel (mechanisch, pneumatisch, elektromagnetisch) die Verschiebung der Blockierklinken 23 und 24 in ihre entsprechenden Positionen verursacht werden.

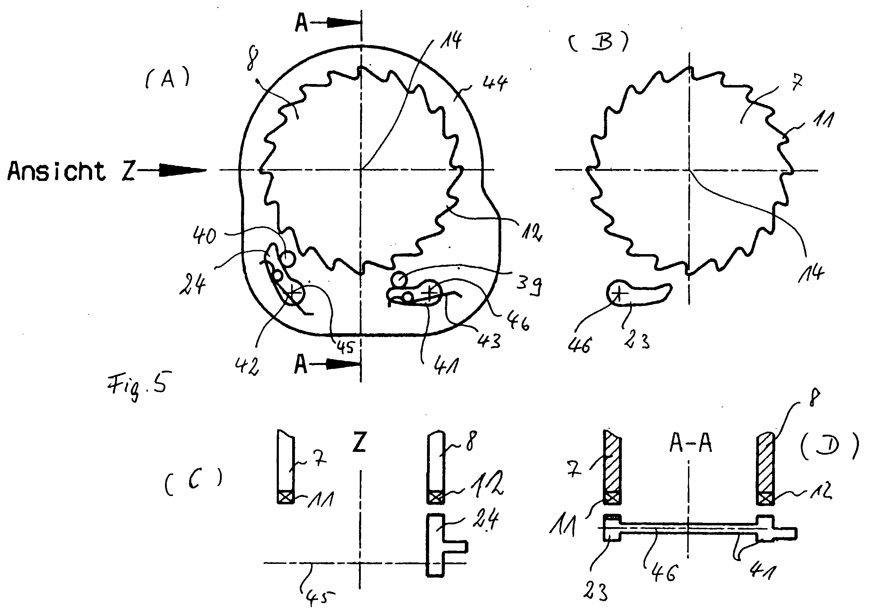

Bei dem in der Fig. 5 dargestellten Ausführungsbeispiel sind an einem drehbar um die Spulenachse 14 gelagerten Steuerelement 44 Federn 42 und 43 abgestützt. Durch eine Vorblockierung, welche durch den Gurtbandsensor oder den Fahrzeugsensor verursacht werden kann, wird das Steuerelement 44 in bekannter Weise in Drehverbindung mit der Gurtspule gebracht, so daß die an dem Steuerelement 44 gelagerten Federn 42 und 43 in Anlage an ein starr mit der Blockierklinke 23 verbundenes Antriebsteil 41 und an die Blockierklinke 24 angelegt werden können. Hierdurch werden beide Blockierklinken 23 und 24 durch die Kräfte der Federn 42 und 43 in Blockierrichtung beaufschlagt. Die Klinken sind um Schwenkachsen 45 und 46 schwenkbar gelagert, so daß sie durch die Federn 42 und 43 in die Blockiereingriffe mit den Blockierverzahnungen 11 und 12 der zweiten Spulenteile 7 und 8 gebracht werden können.

Zur Voreinstellung der Blockierbereitschaft sind parallel zur Spulenachse 14 verschiebbare Einstellstifte 39 und 40 vorgesehen. Durch die Einstellstifte 39 und 40 kann wahlweise eine der beiden Blockierklinken 23 und 24 in Blockierbereitschaft gehalten werden. Wenn beispielsweise der Einstellstift 40 für die Blockierklinke 24 sich nicht in Sperrposition befindet, ist diese Klinke in Blockierbereitschaft gehalten. Durch die Drehung des Steuerelementes 44 wird die Feder 42 an die Blockierklinke 24 in Anlage gebracht. Die Blockierklinke wird dann um die Schwenkachse 45 in den Blockiereingriff mit der Verzahnung 12 des zweiten Spulenteils 8 aufgrund der Federkraft bewegt.

Wenn der Einstellstift 39 für die Blockierklinke 23 in zurückgezogener Position ist, d.h. nicht in Sperrstellung für das Antriebsteil 41 liegt, wird die Blockierklinke 23 ebenfalls in Bereitschaft gehalten. Wenn die Feder 43 mit dem Antriebsteil 41 in Eingriff gebracht wird, wird infolge der starren Verbindung zwischen dem Antriebsteil 41 und der Blokkierklinke 23 die Blockierklinke 23 durch Schwenken um die Achse 46 in Blockiereingriff mit der Verzahnung 11 am zweiten Spulenteil 7 gebracht.

Wie aus der Seitenansicht der Fig. 5 (A) hervorgeht, sind die beiden Blockierklinken 23 und 24 bezüglich der Spulenachse 14 in unterschiedlichen Winkellagen angeordnet. Auch die Einstellstifte 39 und 40, welche den Blockierklinken 23 und 24 zugeordnet sind, befinden sich in unterschiedlichen Winkellagen und können parallel zur Spulenachse 14 durch geeignete Mittel (mechanisch, elektromagnetisch, hydraulisch, pneumatisch) mit Hilfe eines Schieberantriebs gesteuert bewegt werden. Auf diese Weise erreicht man, wie schon erläutert, die voreingestellte Blockierbereitschaft und damit die Voreinstellung der Kraftschwelle für den Lastbegrenzer, welcher in die Gurtspule, wie in den Ausführungsbeispielen der Figuren 1 und 2 gezeigt ist, integriert ist.

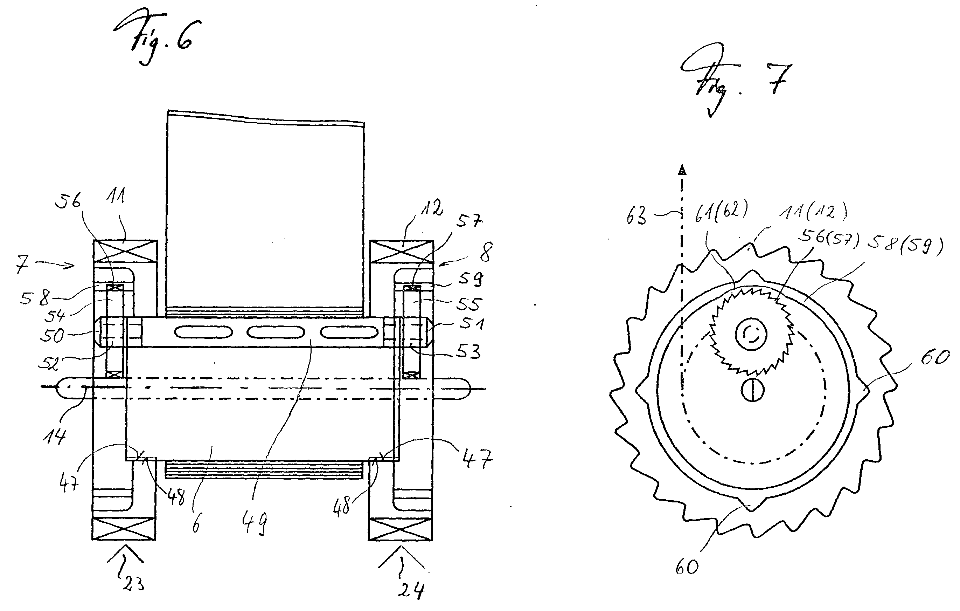

In Fig. 6 ist ein weiteres Ausführungsbeispiel der Erfindung schematisch dargestellt. Die Gurtspule enthält ein erstes Spulenteil 6, das mit seiner Achse 50 am Aufrollerrahmen 13 drehbar gelagert ist, und randseitige, sich gegenüberliegende zweite Spulenteile 7 und 8, die mit dem Spulenteil 6 über einen jeweiligen im einzelnen noch zu beschreibenden Lastbegrenzer drehfest verbunden sind und unabhängig voneinander gegenüber dem Spulenteil 6 verdrehbar sind, wenn die Kraftschwelle für den Lastbegrenzer überschritten ist. Die beiden zweiten Spulenteile 7 und 8, sind als scheibenförmige Räder mit den Blockierverzahnungen 11 bzw. 12, in welche die Blockierklinken 23 und 24 eingreifen können, ausgebildet und weisen jeweils eine zentrale Bohrung 47 auf, deren Durchmesser dem Außendurchmesser eines jeweiligen Absatzes 48 des ersten Spulenteils 6 entspricht, so daß die zweiten Spulenteile 7, 8 mit einem Schiebesitz auf dem ersten Spulenteil 6 gelagert sind. In dem Spulenteil 6 ist ein Durchgangsstift 49 mit Parallelversatz zur Spulenachse 14 drehfest angebracht. Er weist zwei in axialer Richtung aus dem ersten Spulenteil 6 hervorstehende Zapfen 50 und 51 auf, von denen der eine Zapfen 50 (in Fig. 6 der linke Zapfen) ein Rechtsgewinde 52 und der andere Zapfen 51 (in Fig. 6 der rechte Zapfen) ein Linksgewinde 53 aufweist. Auf den beiden Gewinden 51 und 51 sind sind ein Schneidzahnräder 54 und 55 mit am Umfang ausgebildeten Zähnen 56, 57soweit aufgeschraubt. Die Schneidzahnräder 54 und 55 sind bis zum Anschlag an der jeweiligen axialen Stirnseite des Spulenteils 6 aufgeschraubt. In jedem zweiten Spulenteil 7 und 8 ist in einer Bohrung ein Quetschring 58 und 59 aus weichem Material konzentrisch zur Rotationsachse (Spulenachse 14) der Spulenteile derart drehfest angebracht, daß auf seiner Innenoberfläche das jeweilige Schneidzahnrad 54, 55 in Eingriff kommen kann. Die Befestigung erfolgt beispielsweise über am Umfang der Quetschringe 58, 59 hervorstehende Nasen 60, die in zugehörige axiale Vertiefungen am Bohrungsumfang eingesetzt sind. Der jeweilige Quetschring 58, 59hat an seinem Innenumfang eine Vertiefung 61 bzw. 62, die dem Umfang des Schneidzahnrades 54, 55 entsprechend gebildet ist, so daß bei der Montage das Schneidzahnrad auf den jeweiligen Zapfen 50, 51 aufgeschraubt werden kann und dabei in der Vertiefung 61, 62 axial bewegt wird, ohne mit dem Quetschring 58, 59 in Eingriff zu kommen. Der jeweilige Quetschring 58, 59 ist zweckmäßigerweise aus einem Strangpreßprofil aus z. B. Aluminium oder Kupfer oder einem ähnlichem Metall oder einer Metalllegierung gebildet, wobei die beiden Quetschringe 58, 59 aus einem Material mit unterschiedlicher Härte oder Zähigkeit bestehen können. Jeder der beiden Quetschringe 58, 59 bildet mit dem zugehörigen Schneidrad 54, 55einen Lastbegrenzerbereich. Der jeweilige Quetschring 58, 59 besteht aus einem weicheren Material als das zugehörige Schneidrad.

Wenn die Verzahnung 11 und/oder die Verzahnung 12 an den zweiten Spulenteilen durch die zugeordneten Blockierklinken 23, 24 blockiert wird und eine Zugkraft (Pfeil 63) am Gurtband wirkt (siehe Fig. 7), die eine bestimmte Kraftschwelle übersteigt (wie bei den vorausgegangenen Beispielen), kann sich das Spulenteil 6 gegenüber dem jeweils blockierten zweiten Spulenteil 7 und/oder 8 verdrehen, wobei das jeweilige Schneidzahnrad 54, 55 im Schneideingriff am Innenumfang des zugeordneten Quetschringes 58, 59 abläuft und sich dabei auf dem Gewindeabschnitt schraubenartig dreht und axial vom Spulenkörper wegbewegt. Durch die schrauben- oder wendelförmige Bewegungsbahn des gezahnten Umfangs der Schneidräder 54, 55 kann das jeweilige Schneidrad auf mehr als einer Umdrehung auf der Innenseite des zugeordneten Quetschringes wirksam sein. Der maximale Bewegungsweg während der Wirksamkeit des Lastbegrenzerbereichs beträgt beim Ausführungsbeispiel zwei Umdrehungen des Spulenteils 6 und genügt damit dem erforderlichen Gurtbandauszug.

Der Durchgangsstift 49 kann ein Profil, z. B ein Vierkantprofil, aufweisen und dadurch gegen Verdrehen in dem ersten Spulenteil 6 gesichert sein. Der Durchgangsstift 49 kann auch als asymmetrischer Gurtbandriegel gebildet sein, der die Verankerung des Gurtbandes an dem ersten Spulenteil 6 bereitstellt.

Die Kraftschwelle zum Auslösen bzw. Wirksamwerden eines Lastbegrenzerbereichs kann durch eine jeweilige Materialpaarung von Schneidrad und Quetschring (wobei der Verformungswiderstand des Materials des Quetschringes wählbar ist) sowie durch die Anpressung oder Eindringtiefe des Schneidrades in den Quetschring eingestellt werden. Beispielsweise hat der Blockiereingriff am linken zweiten Spulenteil 7 eine Lastschwelle von 2 kN und der Blockiereingriff am rechten zweiten Spulenteil 8 eine Lastschwelle von 3 kN. Bei einem Doppelblockiereingriff ergibt sich eine Lastschwelle von 5 kN.

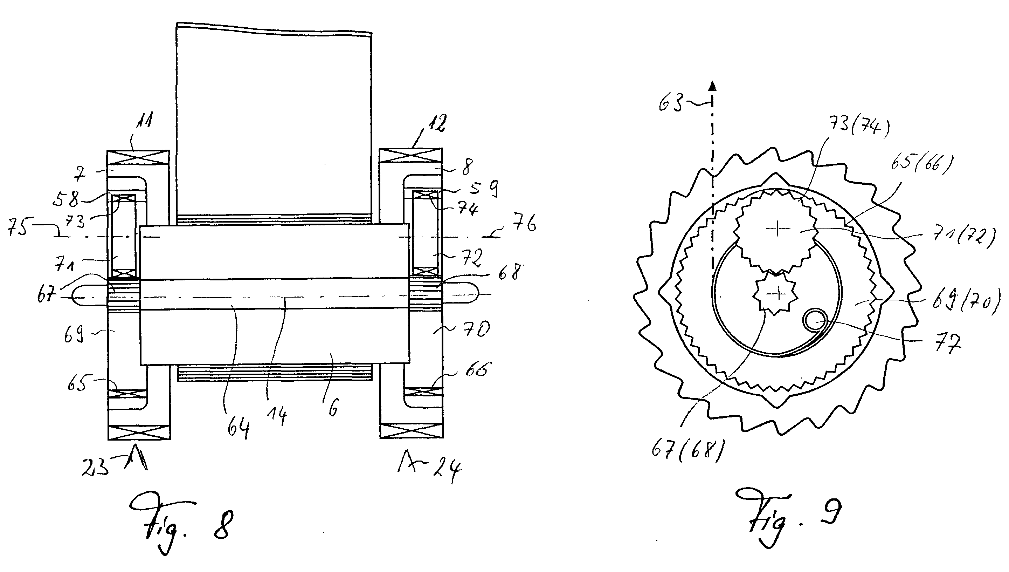

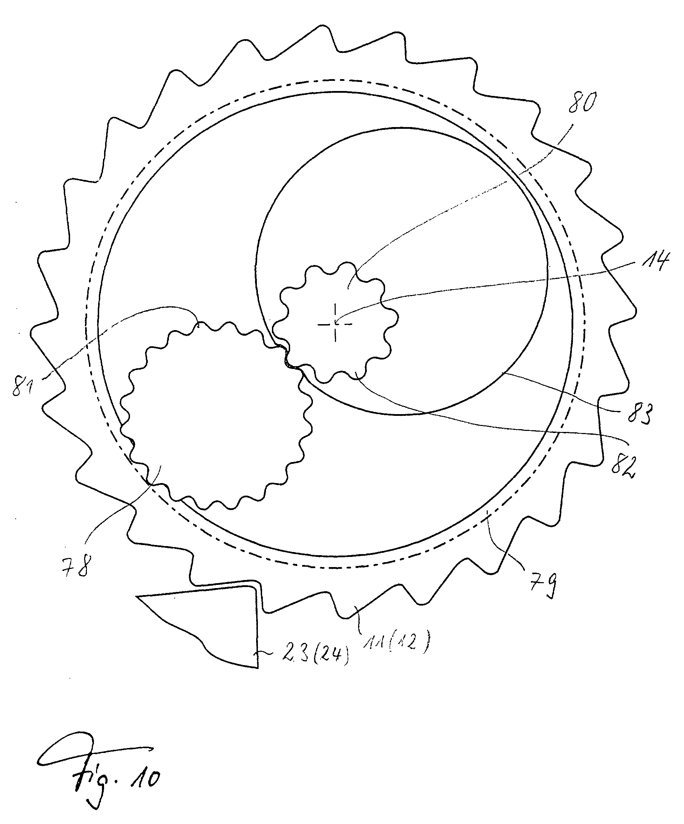

Ein weiteres Ausführungsbeispiel der Erfindung ist in den Fig. 8 und 9 dargestellt. Das erste Spulenteil 6 weist eine zentrische Lagerachse auf, die als mit dem Spulenkörper drehfest verbundener Durchgangsstift 64 ausgebildet sein kann. Die beiden zweiten Spulenteile 7 und 8 entsprechen in ihrer Gestaltung und Anordnung denjenigen des vorangegangenen Ausführungsbeispiels (Fig. 6 und 7). Beidseits des ersten Spulenteils 6 ist auf der Lagerachse bzw. dem Durchgangsstift 64 einen jeweiligen Abschnitt 67, 68 mit einer Profilierung oder Verzahnung in axialer Zuordnung zum jeweiligen Quetschring 58, 59, der ebenfalls eine entsprechende Profilierung oder leichte Vorverzahnung 65, 66 aufweisen kann, ausgebildet. In einem jeweils ringförmigen Raum 69, 70 ist ein Schneidrad 71, 72, das am Umfang eine Schneidverzahnung 73, 74 aufweist, zwischen dem Durchgangsstift 64 und dem jeweiligen Quetschring 58, 59 eingesetzt, wobei seine jeweilige Drehachse 75, 76 nicht mit dem ersten Spulenteil 6 gekoppelt ist. Wenn der Lastbegrenzer bei einem durch die jeweilige Blockierklinke 23, 24 blockierten zweiten Spulenteil 7 bzw. 8 durch Gurtbandzug (Pfeil 63) aktiviert wird (wie schon bei den vorangehend beschriebenen Beispielen erläutert worden ist), dreht der sich drehende Durchgangsstift 64 das jeweilige Schneidrad 71, 71, das wiederum auf dem zugeordneten Quetschring 58, 59 abrollt und sich dabei mit seiner Schneidverzahnung 73, 74 unter Energieverbrauch in den Quetschring eindrückt. Die Profilierung oder Vorverzahnung 65, 66 dient dabei einem sicheren Eingreifen des Schneidrades in den Quetschring. Der Durchmesser des jeweiligen Schneidrades und der Durchmesser des Durchgangsstiftes 64 sind derart gewählt, daß bei zwei Umdrehungen des ersten Spulenteils 6 das jeweilige Schneidrad 71, 72 einen Umlauf im ringförmigen Quetschkörper 58, 59 machen kann. Dies ergibt sich beispielsweise bei einem Untersetzungsverhältnis zwischen dem Schneidrad und dem Durchgangsstift von 1:2. Ein Gurtbandriegel 77 (Fig. 9) kann die Verankerung des Gurtbandes am ersten Spulenteil 6 bilden.

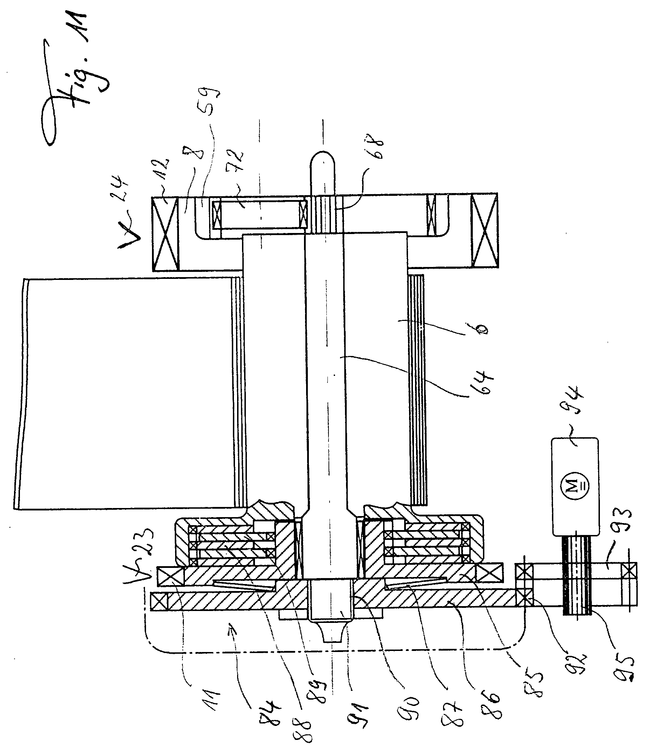

Bei dem in Fig. 10 dargestellten Ausführungsbeispiel, das im wesentlichen dem in den Fig. 8 und 9 beschriebenen Ausführungsbeispiel entspricht, ist zur Bildung eines jeweiligen Lastbegrenzerbereiches ein Schneidrad 78 zwischen einer bei den Seiten des ersten Spulenteils 6 jeweils gebildeten Sonnenrad 80 und einem profilierten Innenumfang 79 des zweiten Spulenteils 7 bzw. 8 eingesetzt und kann wie ein Planetenrad abrollen, wenn es von dem Sonnenrad 80 angetrieben wird. Das Schneidrad 78 (Planetenrad) und das Sonnenrad 80 weisen Außenverzahnungen 81, 82 auf, die miteinander im Eingriff sind, jedoch ein solches Zahnspiel aufweisen, daß ein Quetschring 83 zwischen die Verzahnungen 81, 82 des Schneidrades und das Sonnenrad 80 eingesetzt werden kann, wobei der Quetschring 83 über einen begrenzten Abschnitt eine der Zahnform bzw. dem Zahnspiel angepaßte Vorformung für die Montage in der Ausgangsstellung aufweist. Die Verzahnung kann beispielsweise eine Zykloidenverzahnung sein. Bei aktiver Lastbegrenzung wird der Quetschring 83 bleibend verformt. Das Übersetzungverhältnis ist derart gewählt, daß wiederum bei zwei Umdrehungen des ersten Spulenteils 6 der Quetschring 83 eine Umdrehung ausführt.

Das in Fig. 11 dargestellte Ausführungsbeispiel weist einen Lastbegrenzerbereich, wie er beispielsweise in der Fig. 8 an der rechten Spulenseite dargestellt ist, und einen zweiten Lastbegrenzerbereich in Form einer Lamellenkupplung 84 auf, die beispielsweise entsprechend der Fig. 1 in der DE-A-196 40 842 offenbarten Lamellenkupplung ausgebildet ist.

Die Lamellenkupplung 84 besitzt ein dem linken zweiten Spulenteil 7 der vorherigen Ausführungsbeispiele entsprechendes Eingriffselement 85, das mittels eines Einstellelementes in Form einer Druckscheibe 86 und einer Federanordnung, z.B. einer zwischengelegten Tellerfeder 87 gegen Kupplungsringe 88, 89 der Lamellenkupplung 84 und das erste Spulenteil 6 gespannt werden kann. Die Druckscheibe 86 weist eine mittige Lageröffnung mit einem Innengewinde 90 auf, mit dem die Druckscheibe 86 auf einem Gewindeabschnitt 91 des Durchgangsstiftes 64 aufgeschraubt ist. Das Gewinde 90, 91 kann eine solche Steigung aufweisen, daß Selbsthemmung der Druckscheibe 27 gegen ungewolltes Verdrehen gewährleistet ist. Entsprechend ihrer jeweiligen axialen Positionierung übt die Druckscheibe 86 eine einstellbare Vorspannkraft über die Tellerfeder 87 auf die Kupplungsringe 88, 89 aus, woraus sich unterschiedliche Kräfte zum Überwinden der Kupplungsreibkräfte für eine relative Verdrehung zwischen dem ersten Spulenkörper 6 und dem Eingriffselement 85 ergeben.

Das Eingriffselement 85 weist die Außenverzahnung 11 auf, in die die Blockierklinke 23 eingreifen kann.

Die Druckscheibe 86 weist an ihrem Außenumfang eine Verzahnung 92 auf. Ein Ritzel 93, das auf einer von einem Elektromotor 94 angetriebenen Welle 95 drehfest gelagert ist, ist mit der Verzahnung 92 der Druckscheibe 86 ständig in Eingriff oder kann wahlweise mit der Verzahnung 92 in Eingriff gebracht werden, indem es axial bis zur Druckscheibe 86 verschoben wird. Der Elektromotor 94 kann in Abhängigkeit von einem oder mehreren Parametern (Kennfeldsteuerung) die Druckscheibe 86 verdrehen und damit die Vorspannkraft der Kupplung 84 einstellen. Wenn das Ritzel 93 ständig in Eingriff ist, wird der Elektromotor 94 derart gesteuert, daß ein normaler Gurtbandaus- und -rückzug möglich ist.

Im Bedarfsfall wirkt der rechte Lastbegrenzerbereich mit einer Kraft von 2 kN. Die Lamellenkupplung 84, d. h. der linke Lastbegrenzerbereich, kann bei Überschreiten des Grundniveaus von 2 kN eine zusätzliche Kraft von 0 bis 3 kN aufnehmen, die über die elektrische Lastregelung in diesem Bereich linear, progressiv oder degressiv zu- oder abnehmend gesteuert werden kann in Abhängigkeit von der zu sichernden Person.

## Patentansprüche

1. Gurtaufroller für einen Sicherheitsgurt mit
- einer in einem Aufrollerrahmen (13) drehbar gelagerten Gurtspule (6 - 8);
- einem in wenigstens zwei Lastbegrenzerbereiche (2, 3 und 4, 5; 29, 31 und 30, 32) aufgeteilten Lastbegrenzer, der bei gegen Bandauszug am Aufrollerrahmen (13) blockierter Gurtspule (6 - 8) bei Überschreitung einer bestimmten Kraftschwelle einen Gurtbandauszug mit Energieumwandlung zulässt;
- wenigstens zwei an der Gurtspule (6 - 8) vorgesehenen Blockiereinrichtungen (11, 12), mit denen jeweils die wenigstens zwei Lastbegrenzerbereiche (2, 3 und 4, 5; 29, 31 und 30, 32) gekoppelt sind;
- am Aufrollerrahmen (13) abgestützten Blockierelementen (23, 24), welche einen axialen Abstand voneinander aufweisen und mit den Blockiereinrichtungen (11, 12) der Gurtspule (6 - 8) in Blockiereingriff bewegbar sind; und
- einer Schiebeeinrichtung (30 - 35; 39, 40), mit welcher zur Einstellung einer bestimmten Kraftschwelle die am Gurtaufrollerrahmen (13) abgestützten Blockierelemente (23, 24) durch eine axiale Verschiebung wahlweise für einen Blockiereingriff mit den Blockiereinrichtungen (11, 12) steuerbar sind.

2. Gurtaufroller nach Anspruch 1, dadurch gekennzeichnet, dass die beiden Lastbegrenzerbereiche (2, 3 und 4, 5; 29, 31 und 30, 32) unterschiedliche Kraftschwellen haben.

3. Gurtaufroller nach Anspruch 1 oder 2, dadurch gekennzeichnet, dass die Betätigung der Blockiereinrichtungen (11, 12) in Abhängigkeit von fahrzeuginsassen-spezifischen Daten und/oder fahrzeugspezifischen Daten gesteuert ist.

4. Gurtaufroller nach einem der Ansprüche 1 bis 3, dadurch gekennzeichnet, dass die Blockierelemente (23, 24) im Normalbetrieb durch die Schiebeeinrichtung (33 - 35; 39, 40) in eine der wahlweisen Betätigung der Blockiereinrichtungen (11, 12) entsprechende Betätigungsbereitschaft bringbar sind.

5. Gurtaufroller nach einem der Ansprüche 1 bis 4, dadurch gekennzeichnet, dass die Blockierelemente (23, 24) für die wahlweise Betätigung der Blockiereinrichtungen (11, 12) in axialer Richtung relativ zueinander verschiebbar sind.

6. Gurtaufroller nach einem der Ansprüche 1 bis 5, dadurch gekennzeichnet, dass die Gurtspule (6 - 8) ein erstes Spulenteil (6) aufweist, auf welches das Gurtband (1) des Sicherheitsgurtes aufgewickelt wird, und zweite Spulenteile (7, 8) aufweist, die drehfest mit den Blockiereinrichtungen (11, 12) verbunden sind, dass die Lastbegrenzerbereiche (2, 3 und 4, 5; 29, 31 und 30, 32) zwischen dem ersten Spulenteil (6), auf welches das Gurtband (1) aufgewickelt ist, und den mit den Blockiereinrichtungen (11, 12) drehfest verbundenen zweiten Spulenteilen (7, 8) angeordnet sind und dass das erste Spulenteil (6) gegenüber einem jeweiligen zweiten Spulenteil (7, 8) in Gurtbandauszugsrichtung mit Energieverbrauch im Lastbegrenzer drehbar ist.

7. Gurtaufroller nach der Anspruch 6, dadurch gekennzeichnet, dass auch das erste Spulenteil (6) ein oder mehrere Blockierelemente (27, 28) aufweist, mit denen am Aufrollerrahmen (13) abgestützte Blockierelemente in Eingriff bringbar sind.

8. Gurtaufroller nach einem der Ansprüche 1 bis 7, dadurch gekennzeichnet, dass die Blockiereinrichtungen (11, 12) als Verzahnungen und die Blockierelemente (23, 24) als Klinken ausgebildet sind.

9. Gurtaufroller nach einem der Ansprüche 1 bis 8, dadurch gekennzeichnet, dass ein Teil (3 bzw. 5; 29 bzw. 30) des jeweiligen Lastbegrenzerbereichs in axialer Richtung durch die Drehung des ersten Spulenteils (6) axial verschiebbar ist und dabei Verformungsarbeit leistet.

10. Gurtaufroller nach einem der Ansprüche 1 bis 9, dadurch gekennzeichnet, dass die am Aufrollerrahmen (13) abgestützten Blockierelemente (23, 24) durch ein mittels Vorblockierung mit der Gurtspule (6-8) in Drehverbindung gebrachtes Steuerelement (44) in die Blockierstellung bewegt sind.

11. Gurtaufroller nach einem der Ansprüche 1 bis 10, dadurch gekennzeichnet, dass die Blockiereinrichtungen (11, 12) an der Gurtspule (6 - 8) auf endseitigen Zahnscheiben (7, 8), welche die zweiten Spulenteile bilden, in Form von Verzahnungen vorgesehen sind und dass korrespondierende Blockierelemente (23, 24), welche am Gurtaufrollerrahmen (13) abgestützt sind, wahlweise mit den Verzahnungen in Eingriff steuerbar sind.

12. Gurtaufroller nach einem der Ansprüche 1 bis 11 dadurch gekennzeichnet, dass die am Aufrollerrahmen (13) abgestützten Blockierelemente (23, 24) um die Spulenachse (14) einen Winkelabstand voneinander aufweisen.

13. Gurtaufroller nach einem der Ansprüche 1 bis 12, dadurch gekennzeichnet, dass die am Aufrollerrahmen (13) abgestützten und als Blockierklinken ausgebildeten Blockierelemente (23, 24), jeweils um eine Schwenkachse schwenkbar sind.

14. Gurtaufroller nach einem der Ansprüche 1 bis 13, dadurch gekennzeichnet, dass die in Betätigungsbereitschaft gehaltenen Blockierelemente (23, 24) wahlweise gegen eine Betätigung blockierbar sind.

15. Gurtaufroller nach Anspruch 14, dadurch gekennzeichnet, dass die Blockierelemente (23, 24) durch die Schiebeeinrichtung (39, 40) wahlweise gegen Betätigung blockierbar sind.

16. Gurtaufroller nach einem der Ansprüche 1 bis 6, dadurch gekennzeichnet, dass ein jeweiliger Lastbegrenzerbereich (2, 3 und 4, 5; 29, 31 und 30, 32) von einem beim Drehen des ersten Spulenteils (6) gegenüber dem jeweiligen zweiten Spulenteil (7, 8) verformbaren insbesondere ringförmig ausgebildeten Bereich (58, 59; 83) und einem aus härterem Material bestehenden durch die Drehung des ersten Spulenteils (6) angetriebenen Verformungsteil (54, 55; 71, 72; 78) gebildet ist.

17. Gurtaufroller nach einem der Ansprüche 1 bis 6 und 16, dadurch gekennzeichnet, dass der Lastbegrenzerbereich als Verformungselement ein Schneidrad (54, 55; 71, 72), das exzentrisch zur Drehachse des ersten Spulenteils (6) und um eine zur Spulenachse (14) parallele Achse drehbar gelagert ist, und mit dem verformbaren Bereich (58, 59) am zweiten Spulenteil (7, 8) aufweist, und wobei das Schneidrad (54, 55; 71, 72) im Normalbetrieb im Eingriff mit dem verformbaren Bereich des zweiten Spulenteils (7, 8) ist und bei Überschreiten der Kraftschwelle unter Energieverbrauch schneidend im verformbaren Bereich abläuft.

## Claims

1. Belt retractor for a seat belt with
a belt reel (6-8) rotatably mounted in a retractor frame (13);
a load limiter divided into at least two load limiter regions (2, 3 and 4, 5; 29, 31 and 30, 32) which, when the belt reel (6-8) is blocked against webbing extraction on the retractor frame (13) when a certain force threshold is exceeded, allows extraction of the belt webbing with conversion of energy;
at least two blocking devices (11, 12) provided on the belt reel (6-8), with which blocking devices the at least two load limiter regions (2, 3 and 4, 5; 29, 31 and 30, 32) are coupled in each case;
blocking elements (23, 24) supported on the retractor frame (13), which blocking elements are axially spaced from one another and can be moved in blocking engagement with the blocking devices (11, 12) of the belt reel (6-8); and
a slide device (30-35; 39, 40), with which the blocking elements (23, 24) supported on the belt retractor frame (13) can be selectively controlled by an axial displacement for a blocking engagement with the blocking devices (11, 12) for adjusting a certain force threshold.

2. Belt retractor according to claim 1, characterised in that the two load limiter regions (2, 3 and 4, 5; 29, 31 and 30, 32) have different force thresholds.

3. Belt retractor according to claim 1 or 2, characterised in that actuation of the blocking devices (11, 12) is controlled as a function of the vehicle occupant-specific data and/or vehicle-specific data.

4. Belt retractor according to one of claims 1 to 3, characterised in that the blocking elements (23, 24) can be brought, in normal operation, by the slide device (33-35; 39, 40), to a state of readiness corresponding to the selective actuation of the blocking devices (11, 12).

5. Belt retractor according to one of claims 1 to 4, characterised in that the blocking elements (23, 24) can be displaced relative to one another in an axial direction for the selective actuation of the blocking devices (11, 12).

6. Belt retractor according to one of claims 1 to 5, characterised in that the belt reel (6-8) comprises a first reel portion (6) onto which the belt webbing (1) of the seat belt is wound, and second reel portions (7, 8) which are non-rotatably connected to the blocking devices (11, 12), in that the load limiter regions (2, 3 and 4, 5; 29, 31 and 30, 32) are arranged between the first reel portion (6) on which the belt webbing (1) is wound and the second reel portions (7, 8) non-rotatably connected to the blocking devices (11, 12) and in that the first reel portion (6) is rotatable relative to a respective second reel portion (7, 8) in the direction of belt webbing extraction with energy consumption in the load limiter.

7. Belt retractor according to claim 6, characterised in that the first reel portion (6) also has one or more blocking elements (27, 28) with which blocking elements supported on the retractor frame (13) can be brought into engagement.

8. Belt retractor according to one of claims 1 to 7, characterised in that the blocking devices (11, 12) are designed as teeth and the blocking elements (23, 24) as pawls.

9. Belt retractor according to one of claims 1 to 8, characterised in that a portion (3 or 5; 29 or 30) of the respective load limiter region is axially displaceable in the axial direction by the rotation of the first reel portion (6) and in this process performs deformation work.

10. Belt retractor according to one of claims 1 to 9, characterised in that the blocking elements (23, 24) supported on the retractor frame (13) are moved into the blocking position by a control element (44) brought into rotational connection to the belt reel (6-8) by means of pre-blocking.

11. Belt retractor according to one of claims 1 to 10, characterised in that the blocking devices (11, 12) are provided on the belt reel (6-8) on toothed discs (7, 8) on the end face, which form the two reel portions in the form of teeth and in that corresponding blocking elements (23, 24) supported on the belt retractor frame (13) can selectively be controlled in engagement with the teeth.

12. Belt retractor according to one of claims 1 to 11, characterised in that the blocking elements (23, 24) supported on the retractor frame (13) have an angular spacing from one another round the reel axis (14).

13. Belt retractor according to one of claims 1 to 12, characterised in that the blocking elements (23, 24) supported on the retractor frame (13) and designed as blocking pawls, can be pivoted, in each case, round a pivot axis.

14. Belt retractor according to one of claims 1 to 13, characterised in that the blocking elements (23, 24) held in readiness for actuation can selectively be blocked against actuation.

15. Belt retractor according to claim 14, characterised in that the blocking elements (23, 24) can selectively be blocked against actuation by the slide device (39, 40).

16. Belt retractor according to one of claims 1 to 6, characterised in that a respective load limiter region (2, 3 and 4, 5; 29, 31 and 30, 32) is formed by an in particular annular region (58, 59; 83) which is deformable when the first reel portion (6) is rotated relative to the respective second reel portion (7, 8) and by a deforming portion (54, 55; 71, 72; 78) consisting of harder material and driven by the rotation of the first reel portion (6).

17. Belt retractor according to one of claims 1 to 6 and 16, characterised in that the load limiter region as deforming element comprises a cutting wheel (pinion cutter) (54, 55; 71, 72) mounted eccentrically to the axis of rotation of the first reel portion (6) and mounted rotatably round an axis parallel to the reel axis (14), and with the deformable region (58, 59) on the second reel portion (7, 8), and wherein the cutting wheel (54, 55; 71, 72) is in engagement with the deformable region of the second reel portion (7, 8) in normal operation and operates in a cutting manner while consuming energy in the deformable region when the force threshold is exceeded.

## Revendications

1. Enrouleur de ceinture pour une ceinture de sécurité, comprenant
une bobine de la ceinture (6-8) agencée de façon rotative dans un châssis de l'enrouleur (13);
un limiteur de charge, subdivisé au moins en deux secteurs de limitation de la charge (2, 3 et 4, 5; 29, 31 et 30, 32), permettant en cas de blocage de la bobine de la ceinture contre une extension de la sangle sur le châssis de l'enrouleur (13) et en cas de dépassement d'un seuil de force défini une extension de la sangle de la ceinture avec conversion de l'énergie;
au moins deux dispositifs de blocage (11, 12) agencés sur la bobine de la ceinture (6-8), auxquels sont accouplés les au moins deux secteurs de limitation de la charge (2, 3 et 4, 5; 29, 31 et 30, 32);
des éléments de blocage (23, 24) supportés sur le châssis de l'enrouleur (13), espacés axialement et pouvant être déplacés en vue d'un engagement à blocage dans les dispositifs de blocage (11, 12) de la bobine de la ceinture (6-8); et un dispositif coulissant (30-35; 39, 40), permettant d'assurer la commande des éléments de blocage (23, 24) supportés sur le châssis de l'enrouleur de la ceinture (13) en vue du réglage d'un seuil de force défini, par déplacement axial optionnel en vue d'un engagement à blocage dans les dispositifs de blocage (11, 12).

2. Enrouleur de ceinture selon la revendication 1, caractérisé en ce que les deux secteurs de limitation de la charge (2, 3 et 4, 5; 29, 31 et 30, 32) présentent des seuils de force différents.

3. Enrouleur de ceinture selon les revendications 1 ou 2, caractérisé en ce que l'actionnement des dispositifs de blocage (11, 12) est commandé en fonction de données spécifiques à l'occupant du véhicule et/ou de données spécifiques au véhicule.

4. Enrouleur de ceinture selon l'une des revendications 1 à 3, caractérisé en ce que les éléments de blocage (23, 24) peuvent en service normal être mis par l'intermédiaire du dispositif coulissant (33-35; 39, 40) dans un état prêt à l'actionnement correspondant à l'actionnement optionnel des dispositifs de blocage (11, 12).

5. Enrouleur de ceinture selon l'une des revendications 1 à 4, caractérisé en ce que les éléments de blocage (23, 24) peuvent être déplacés axialement l'un par rapport à l'autre en vue de l'actionnement optionnel des dispositifs de blocage (11, 12).

6. Enrouleur de ceinture de sécurité selon l'une des revendications I à 5, caractérisé en ce que la bobine de la ceinture (6-8) comporte un premier élément de bobine (6), sur lequel est enroulée la sangle (1) de la ceinture de sécurité, et des deuxièmes éléments de bobine (7, 8), reliés de façon non-rotative avec les dispositifs de blocage (11, 12), en ce que des secteurs de limitation de la charge (2, 3 et 4; 5; 29, 31 et 30, 32) entre le premier élément de bobine (6), sur lequel est enroulée la sangle (1), et les deuxièmes éléments de bobine (7, 8), reliés de façon non-rotative avec les dispositifs de blocage (11, 12), le premier élément de bobine (6) pouvant tourner par rapport à un deuxième élément de bobine respectif (7, 8) dans la direction de l'extension de la sangle de la ceinture, avec consommation d'énergie dans le limiteur de charge.

7. Enrouleur de ceinture selon la revendication 6, caractérisé en ce que le premier élément de bobine (6) comporte également un ou plusieurs éléments de blocage (27, 28), dans lesquels peuvent s'engager les éléments de blocage supportés sur le châssis de l'enrouleur (13).

8. Enrouleur de ceinture selon l'une des revendications 1 à 7, caractérisé en ce que les dispositifs de blocage (11, 12) ont la forme de dentures, les éléments de blocage (23, 24) ayant la forme de cliquets.

9. Enrouleur de ceinture selon l'une des revendications 1 à 8, caractérisé en ce qu'une partie (3 ou 5; 29 ou 30) du secteur de limitation de la charge respectif peut être déplacée axialement dans la direction axiale par suite de la rotation du premier élément de bobine (6), assurant ainsi un travail de déformation.

10. Enrouleur de ceinture selon l'une des revendications 1 à 9, caractérisé en ce que les éléments de blocage (23, 24) supportés sur le châssis de l'enrouleur (13) sont déplacés dans la position de blocage par un élément de commande (44) relié par rotation avec la bobine de la ceinture (6-8) par l'intermédiaire d'un blocage préliminaire.

11. Enrouleur de ceinture selon l'une des revendications 1 à 10, caractérisé en ce que les dispositifs de blocage (11, 12) sont agencés sous forme de dentures sur la bobine de la ceinture (6-8) sur des disques dentés d'extrémité (7, 8), constituant les deuxièmes éléments de bobine, les éléments de blocage correspondants (23, 24), supportés sur le châssis de l'enrouleur (13), pouvant optionnellement être commandés en vue d'un engagement dans les dentures.

12. Enrouleur de ceinture selon l'une des revendications 1 à 11, caractérisé en ce que les éléments de blocage (23, 24) supportés sur le châssis de l'enrouleur (13) sont espacés angulairement autour de l'axe de la bobine (14).

13. Enrouleur de ceinture selon l'une des revendications 1 à 12, caractérisé en ce que les éléments de blocage (23, 24) supportés sur le châssis de l'enrouleur (13) et ayant la forme de cliquets de blocage peuvent respectivement pivoter autour d'un axe de pivotement.

14. Enrouleur de ceinture selon l'une des revendications 1 à 13, caractérisé en ce que les éléments de blocage (23, 24) maintenus dans un état prêt à l'actionnement peuvent optionnellement être bloqués contre un actionnement.

15. Enrouleur de ceinture selon la revendication 14, caractérisé en ce que les éléments de blocage (23, 24) peuvent optionnellement être bloqués contre un actionnement par le dispositif coulissant (39, 40).

16. Enrouleur de ceinture selon l'une des revendications 1 à 6, caractérisé en ce qu'un secteur de limitation de la charge respectif (2, 3 et 4, 5; 29, 31 et 30, 32) est constitué par un secteur essentiellement annulaire (58, 59; 83) déformable lors de la rotation du premier élément de bobine (6) par rapport au deuxième élément de bobine respectif (7, 8) et par une partie de déformation (54, 55; 71, 72; 78) composée d'un matériau plus dur et entraînée par la rotation du premier élément de bobine (6).

17. Enrouleur de ceinture selon l'une des revendications 1 à 6 et 16, caractérisé en ce que le secteur de limitation de la charge comporte comme élément de déformation un outil pignon (54, 55; 71, 72), agencé excentriquement par rapport à l'axe de rotation du premier élément de bobine (6) et autour d'un axe parallèle à l'axe de la bobine (14), et comportant le secteur déformable (58, 59) sur le deuxième élément de bobine (7, 8), l'outil pignon (54, 55; 71, 72) étant en service normal engagé dans le secteur déformable du deuxième élément de bobine (7, 8), se déroulant en coupant dans le secteur déformable lors d'un dépassement du seuil de force, avec consommation d'énergie.
